# EUROPEAN PATENT APPLICATION

(11) **EP 3 205 588 A1**
(43) Date of publication of application: **16.08.2017**
(21) Application number: 17155108.8
(22) Date of filing: 08.02.2017
(51) Int. Cl.: B65B 51/14, B65B 51/30, B29C 65/02

(54) **SEALING JAW WITH A SENSOR**

(30) Priority: 09.02.2016 EP 16000316
(71) Applicant: GEA Food Solutions Weert B.V., 6006 RV Weert (NL)
(72) Inventor: Baumeister, Bruno Gerfried, 52078 Aachen (DE); van Rens, Joseph Johan Maria, 6003BK Weert (NL)
(74) Representative: Kutzenberger Wolff & Partner

(57) **Abstract**

The present invention relates to a packaging machine with a sealing system (1), comprising a first jaw (2) and a second jaw (3), whereas each jaw (2, 3) is reciprocate between an open- and a sealing-position by a driving means (5, 6, 7, 8, 12, 13). The present invention further relates to a method to operate a sealing system (1) of a packaging machine.

## Description

The present invention relates to a packaging machine with a sealing system, comprising a first jaw and a second jaw, whereas each jaw is reciprocate between an open- and a sealing-position by a driving means. The present invention further relates to a method to operate a sealing system of a packaging machine.

Such a packaging machine is known from the state of the art and is for example a so called vertical flow wrapper in which a film is formed into a tube and is provided with a longitudinal seal. This tube is filled with the packaging item and a cross seal is provided at the lower and the upper end of the package. Subsequently, the package is separated from the film tube. The cross seal is applied by a sealing system which comprises a first jaw and a second jaw which reciprocate between an open- and a sealing position and which are driven by a motor. For the quality of the seal, the sealing pressure applied is important, which has been controlled in the past by measuring the energy consumption of the motor during sealing. Based on this measurement, the moment of momentum provided by the motor has been calculated and with a given geometry of the sealing system, the sealing pressure could be calculated. However, due to friction forces etc. this measurement was inaccurate.

It was therefore the objective of the present invention to provide a packaging machine which does not comprise the deficiencies according to the state of the art.

The problem is attained by a packaging machine with a sealing system, comprising a first jaw and a second jaw, whereas each jaw is reciprocate between an open- and a sealing-position by a driving means and further comprising means to measure a mechanical force in at least one part of the drive means.

The disclosure made regarding this embodiment of the present invention also applies to the other embodiments and vice versa.

The present invention relates to a packaging machine, which packages a packaging item into individual packages. Preferably this packaging machine is a so called vertical flow wrapper, which forms a plain film into a tube, provides a longitudinal seal to the film tube, fills the film tube with a packaging item and provides a cross seal at the top and at the bottom of each package in order to close the package hermetically. Subsequently or simultaneously, the package is separated from the film tube. In order to apply the cross seal to the package, the inventive packaging machine comprises a sealing system.

This sealing system has a first jaw and a second jaw, which reciprocate between an open- and a sealing position. In the sealing position, the two jaws interact and apply pressure and preferably heat to the film tube in order to apply the cross-seal. In the open position, the two jaws are removed from the film tube. The two jaws are driven by driving means, which for example comprises at least one, preferably two drive shafts per jaw and/or at least one, preferably two pull/push-rods per jaw. Each pull/push-rods is driven by a crank-shaft. Both jaws are preferably driven by one motor, more preferably a servo motor, which even more preferably drives the crank-shaft. This motor is preferably controlled such, that a certain sealing pressure can be applied.

According to the present invention, the packaging machine comprises means to measure a mechanical force in at least one part of the drive means. The drive mechanism is provided between the motor and the jaws and is preferably a transmission that converts a rotation into a linear movement. This mechanical force is preferably a tensile and/or compressive force and/or a moment of momentum. Based on this measurement the force at the sealing force is either immediately known or can be derived easily. The measurement can be taken relatively close to the sealing jaws, so that influences based on friction or the like can be reduced.

According to a preferred embodiment of the present invention, the driving means comprise at least one, preferably two drive shafts, which are connected to the sealing jaw. Each drive shaft can move linearly and is guided in a frame of the sealing system. In this preferred embodiment of the present invention, the mechanical force measured is a tensile- and/or a compressive force in the drive shaft.

Preferably, the driving means comprises a pair of drive shafts at least for one jaw. The drive shafts are preferably connected symmetrically to the at least one, preferably two mid-planes of the jaw. According to this embodiment of the present invention, the mechanical forces are measured in both drive shafts connected to one jaw. Due to the measurement of the mechanical forces in both drive shafts, the measurement is redundant and/or asymmetries in the forces in the drive shafts are recognized. In case these asymmetries are too large, an alarm can be set off and/or the packaging machine can be stopped. Additionally, asymmetries can be an indicator for insufficient sealing and/or a foreign object in the sealing plane, so that such packages are sorted out.

The measurement of the mechanical forces can be compared with the forces derived from the energy uptake of the motor. In case the discrepancy is too large, the machine must be cleaned and/or maintained, because for example the friction is too high.

Preferably, the mechanical force measurement means is a pressure sensor, for example a piezo-element, and/or a strain gauge.

Another subject matter of the present invention is a method to operate a sealing system of a packaging machine with two jaws which are each driven by a driving means, wherein the mechanical forces in at least one part of the drive means is measured and the signal is utilized to control a motor which drives the jaws.

The disclosure made regarding this embodiment of the present invention also applies to the other embodiments and vice versa.

This embodiment of the present invention is directed to method to control the sealing pressure of the cross seals of a packaging machine. Contrary to the state of the art, the sealing pressure applied during sealing is not derived from the energy uptake of the motor that drives the sealing jaws but mechanical forces in at least one part of the drive mechanism is measured directly. This measurement is preferably directly proportional to the sealing force applied. Preferably, the force measured is a pressure- and/or a tensile force, more preferably at/in a part of the driving means that move only linearly, like the drive shaft.

According to another inventive or preferred embodiment of the present invention, the driving means comprises a pair of drive shafts or a pair of pull/push-rods per jaw and that a mechanical force are measured in both shafts and/or both pull/push-rods of at least one pair.

The disclosure made regarding this embodiment of the present invention also applies to the other embodiments and vice versa.

According to this embodiment of the present invention, there are two sensors, which measure the mechanical forces in a pair of drive shafts and/or a pair of pull/push-rods that drive one jaw. Due to this measurement, an asymmetric load on the jaw will be readily realized, which may result from a foreign subject, like the packaging article, in the sealing plane and/or a misalignment of the jaws. A warning signal can be activated and/or the packaging machine can be stopped. Asymmetrical forces also indicate an insufficient seal, so that the respective packages should be sorted out.

Preferably, both measurement results are taken to control the motor and/or to assess the quality of the resulting seal.

The inventions are now explained according to figures 1-3. These explanations do not limit the scope of protection. The explanation applies to all inventions, respectively.
- **Figures 1 and 2**: show the sealing system.
- **Figure 3**: shows details of the measurement means.

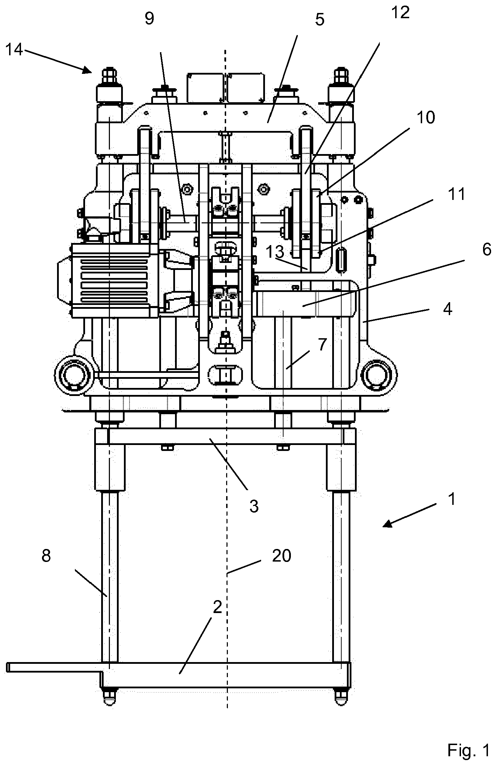

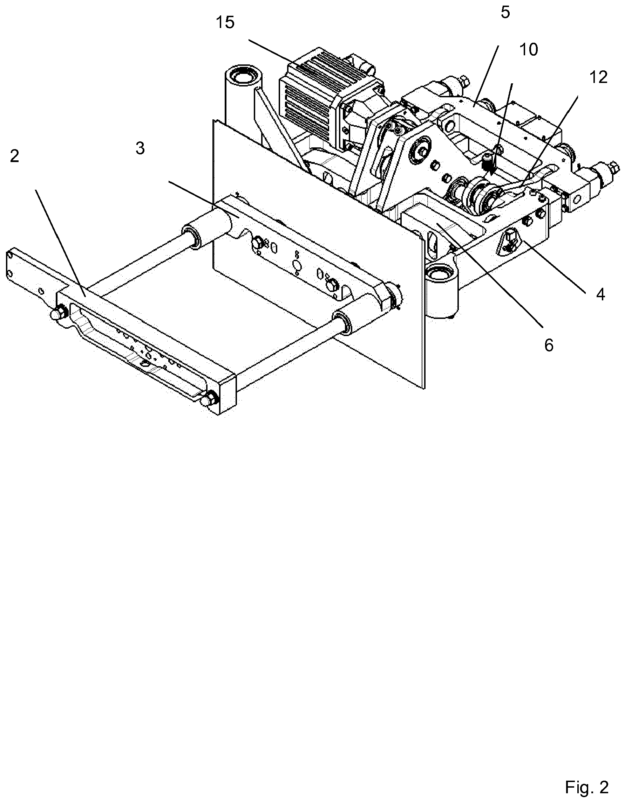

**Figures 1** **and** **2** show the sealing system 1 of the inventive packaging machine. This sealing system 1 comprises a front jaw 2 and a rear jaw 3 which reciprocate between an open- and a sealing-position. The open-position is depicted in figure 1 and 2. The first, here the front jaw 2 is connected to two drive shafts 8, which are supported in a frame 4 of the sealing system 1. At their rear end, the drive shafts 8 are secured to a beam 5 via the securing means 14, here two nuts, which are screwed to the rear end of each drive shaft 8. The second, here the rear jaw 3 is connected to two drive shafts 7, which comprise at their rear end a beam 6. Each beam 5, 6 is connected with one end of two pull/push-rods 12, 13, respectively. The other end of the pull/push-rods 12, 13 are connected to a rotating crank-shaft 9, which is driven via another pull/push-rod by a motor 15, preferably a servo motor. Looking from the side where motor 15 is located, by turning the crank-shaft 9 counterclockwise, the first jaw 2 and the second jaw 3 move from their open position to the sealing position. A clockwise rotation of the rotation drive 9 results in a movement of the jaws 2, 3 into their open position. The pull/push-rods 12 and the drive shafts 7, 8 are provided symmetrically relative to a center plane 20.

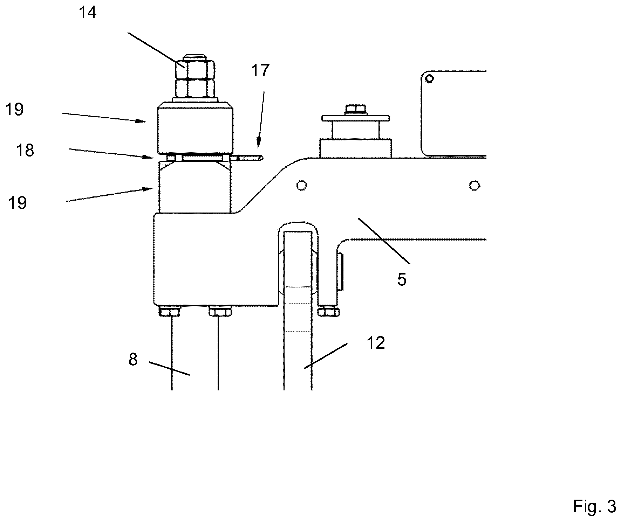

Reference is now made to **Figure 3**, which shows details of the means to measure a mechanical force in the driving means of the jaws 2, 3, here in each of the pair of drive shafts 8. The measurement means, here a pressure sensor 18, measure independently a pressure which is applied to measurement means 18 and hence to the jaw 2. The measurement means is here a piezo element, which is, in the present case, provided between two pressure rings. A connection 17 connects each sensor 18 to the control system of the packaging machine. From the measured pressure, the force in jaw 2 during sealing can be calculated. Since the measurement is relatively close to the jaw 2, measurement errors, for example due to friction, can be reduced. The signal of the sensors can be utilized to control the motor 15.

Since both sensors 18 measure independently from each other the mechanical load on the drive shafts 8, asymmetries in the sealing force along the jaw can easily be recognized. These asymmetries result either from a misalignment to the two jaws 2, 3 and/or from a foreign object in the sealing plane. Both "errors" can be readily recognized by the control system of the machine and an alarm and/or a machine stop can be initiated. Additionally or alternatively, asymmetrical forces in the drive shaft indicate an insufficient seal at the package, so that this package should be sorted out.

The person skilled in the art understands that alternatively or additionally sensors 18 can also be provided at or around drive shafts 7 and/or push/pull-rods 12, 13.

### List of reference signs:

- 1: Sealing System
- 2: first jaw
- 3: second jaw
- 4: Frame
- 5: Beam for the first jaw
- 6: Beam for the second jaw
- 7: Drive shaft second jaw
- 8: Drive shaft for the first jaw
- 9: Rotation means
- 10: crank to drive the beam 5
- 11: crank to drive the beam 6
- 12: Push/pull rod to drive beam 5
- 13: pull/push-rod to drive beam 6
- 14: Securing means
- 15: Motor
- 16: Pressure ring
- 17: Connection
- 18: Means to measure a mechanical force, pressure-sensor, tensile force sensor
- 19: Pressure ring
- 20: Center plane, vertical center plane

## Claims

1. Packaging machine with a sealing system (1), comprising a first jaw (2) and a second jaw (3), whereas each jaw (2, 3) is reciprocate between an open- and a sealing-position by a driving means (5, 6, 7, 8, 12, 13), **characterized in, that** it comprises means (18) to measure a mechanical force in at least one part of the drive means.

2. Packaging machine according to claim 1, **characterized in, that** the driving means (5, 6, 7, 8, 12, 13) comprise a drive shaft (7, 8) and that the mechanical force is measured in the drive shaft.

3. Packaging machine according to claim 1 or 2 **characterized in, that** the driving means (5, 6, 7, 8, 12, 13) comprises a pair of drive shafts (7, 8) per jaw (2, 3) and that the mechanical forces are measured in both drive shafts (7, 8) of at least one pair of drive shafts.

4. Packaging machine according to one of the preceding claims, **characterized in, that** the means (18) is a pressure sensor and/or a strain gauge.

5. Method to operate a sealing system (1) of a packaging machine with a two jaws (2, 3) which are each driven by a driving means (5, 6, 7, 8, 12, 13), **characterized in that** the mechanical forces in at least one part of the drive means is measured and the signal is utilized to control a motor (15) which drives the jaws.

6. Method according to claim 5 or the preamble of claim 5, **characterized in, that** the driving means (5, 6, 7, 8, 12, 13) comprises a pair of drive shafts (7, 8) or a pair of push/pull-rods (12, 13) per jaw (2, 3) and that a mechanical force is measured in both shafts (7, 8) and/or both pull/push-rods (12, 13) of at least one pair.

7. Method according to claim 6, **characterized in, that** both measurement results are taken to control the motor and/or to assess the quality of the resulting seal.
